# EUROPÄISCHE PATENTSCHRIFT

(11) **EP 1 992 395 B1**
(45) Veröffentlichungstag und Bekanntmachung des Hinweises auf die Patenterteilung: **10.11.2010**
(21) Anmeldenummer: 08103224.5
(22) Anmeldetag: 31.03.2008
(51) Int. Cl.: B01D 46/24

(54) **Filter, insbesondere Luftfilter**
Filter, particularly air filter
Filtre, en particulier filtre à air

(30) Priorität: 08.05.2007 DE 202007006769 U
(43) Veröffentlichungstag der Anmeldung: 19.11.2008
(73) Patentinhaber: MANN+HUMMEL GmbH, 71638 Ludwigsburg (DE)
(72) Erfinder: Münkel, Karlheinz, 75038, Oberderdingen-Flehingen (DE)

(56) Entgegenhaltungen:
- EP-A- 0 323 701
- EP-A- 1 222 951
- EP-A- 1 595 589
- WO-A-02/31340
- WO-A-95/00232
- DE-U1- 29 808 779

## Beschreibung

### Technisches Gebiet

Die Erfindung betrifft einen Filter, insbesondere Luftfilter, der im Oberbegriff des Anspruchs 1 angegebenen Gattung.

### Stand der Technik

In der US 5,547,480 ist ein Luftfilter beschrieben, der ein zylindrisches Gehäuse umfasst, in dem ein Filterelement angeordnet ist. Das Gehäuse weist an seiner Mantelfläche einen Lufteinlassstutzen auf, der in einen das Filterelement umgebenden Ringraum mündet. An einer Stirnseite des Gehäuses ist ein Luftaustrittsstutzen vorgesehen, der mit dem innerhalb des Filterelementes gebildeten Innenraum in Verbindung steht. An dem anderen stirnseitigen Ende des Gehäuses befindet sich ein abnehmbarer Deckel, der mittels klammerartigen Spannbügeln an dem zylindrischen Gehäuseteil festlegbar ist. Durch Lösen der Spannbügel und Abnehmen des Deckels kann das Filterelement entnommen und durch ein neues Filterelement ersetzt werden. Das Filterelement besteht aus einem trommelförmigen Filtermedium, das stirnseitig mit Endscheiben versehen ist, welche sich in fluiddichter Anlage an Stirnwänden des Gehäuses bzw. Deckels befinden.

Dokument WO 02 313 40 offenbart einen Filter mit einem Gehäuse, wobei das Gehäuse mit einem lösbaren Deckel versehen ist und wobei der lösbare Deckel eine gemeinsame Baueinheit mit dem Filterelement bildet.

Der Erfindung liegt die Aufgabe zu Grunde, einen Filter der eingangs genannten Gattung zu schaffen, bei dem der Wechsel des Filterelementes einfach und sicher durchführbar ist.

Diese Aufgabe wird durch einen Filter mit den Merkmalen des Anspruchs 1 gelöst.

### Offenbarung der Erfindung

Dadurch, dass der lösbare Deckel eine gemeinsame Baueinheit mit dem Filterelement bildet und gleichzeitig als Endscheibe des Filterelementes ausgestaltet ist, wird durch Abnehmen des Deckels gleichzeitig auch das Filterelement entnommen, so dass hierfür lediglich eine einzige Handlung erforderlich ist. Beim Einbau eines neuen Filterelementes befindet sich der Deckel bereits am Filterelement, so dass beim vollständig eingesetzten Filterelement bereits das Gehäuse fluiddicht verschlossen ist. Dies vereinfacht nicht nur die Montage, sondern es werden auch Montagefehler vermieden.

Gemäß einer zweckmäßigen Weiterbildung des Erfindungsgegenstandes ist der die Endscheibe des Filterelementes bildende Deckel mit dem stirnseitigen Ende des Filtermediums verklebt. Auf diese Weise ist eine fluiddichte Verbindung des Filtermediums mit dem Deckel gegeben. Darüber hinaus ist es vorteilhaft, dass der Deckel einen axialen Stutzen umfasst, der in einem rohrförmigen Abschnitt eines Gehäuseteils aufgenommen und gegen diesen abgedichtet ist. Dies dient nicht nur einer zuverlässigen Halterung, sondern gleichzeitig auch der Abdichtung gegen das Gehäuseteil. Dabei ist es vorteilhaft, als Dichtung zwei an der Mantelfläche des Stutzens angeformte Ringwülste vorzusehen, so dass keine zusätzlichen Dichtungselemente notwendig sind. Um eine definierte Position des Deckels in axialer Richtung zu erreichen, wird vorgeschlagen, dass der Deckel einen radial nach außen gerichteten umlaufenden Kragen umfasst, der an einer stirnseitigen Fläche des Gehäuses liegt.

Das Filterelement weist ein im Wesentlichen zylindrisches Stützgitter auf, auf dem konzentrisch das Filtermedium angeordnet ist. Das Stützgitter hat dabei den Vorteil, dass das Filtermedium sowohl in radialer Richtung als auch in axialer Richtung exakt seine Form beibehält. Dabei ist es weiterhin von Vorteil, dass das Stützgitter an seinem dem Deckel benachbarten Ende geschlossen ist und einen Teil des Deckels bildet. Dies wird dadurch erreicht, dass der die Endscheibe bildende Teil des Deckels als Ringelement mit einer zentrischen Öffnung gestaltet ist und das geschlossene Ende des Stützgitters diese Öffnung ausfüllt. Dadurch besteht die Möglichkeit, vor der Zusammenfügung des Ringelementes mit dem Stützgitter das Filtermedium auf das Stützgitter aufzuschieben, dann das Ringelement auf das Ende des Stützgitters aufzusetzen und durch Aufbringen eines geeigneten Verbindungsmittels eine unlösbare Anordnung aus Deckel und Filterelement zu schaffen.

Gemäß einer Weiterbildung des Erfindungsgegenstandes ist innerhalb des Stützgitters ein Sicherheitselement angeordnet, das abgedichtet an einem Auslassstutzen gehalten ist. Damit wird verhindert, dass durch den Auslassstutzen in das angeschlossene System Schmutz eindringt, wenn das Filterelement beschädigt ist oder ausgewechselt wird. Das Sicherheitselement besteht vorzugsweise aus einem Stützgitter und einem dieses überspannende Filtermedium. Zur Erleichterung der Handhabung beim Ausbau eines verschmutzten Filterelementes und Einbau eines neuen Filterelementes wird vorgeschlagen, dass der Deckel an seiner Außenseite mit einer Anordnung zur verbesserten Krafteinleitung im Hinblick auf ein Lösen oder Befestigen der Baueinheit versehen ist.

Während ein Lufteinlassstutzen an der Mantelfläche des Gehäuses angeordnet ist, wird zweckmäßigerweise an der Stirnseite des dem Deckel abgewandten Endes des Gehäuses ein Auslassstutzen konzentrisch zur Längsachse des Gehäuses vorgesehen. Dieser Auslassstutzen weist vorteilhafterweise einen axial nach innen gerichteten Abschnitt auf, der mit einem Außengewinde versehen ist. Dies hat den Vorteil, dass das Filterelement auf das Außengewinde am Auslassstutzen schraubbar ist, wenn an dem Ende des Stützgitters, das dem Deckel abgewandt liegt, ein Innengewinde vorgesehen ist. Damit ist ein sicherer Halt des Filterelementes in dem Gehäuse gegeben.

Zweckmäßigerweise weist das Stützgitter an seinem dem Deckel abgewandten Ende einen radialen Flansch auf, der als diesem Ende des Filtermediums zugeordnete Endscheibe dient. Mit dieser Endscheibe ist das Ende des Filtermediums vorzugsweise auf die gleiche Weise verbunden wie am anderen Ende mit dem Ringelement, das heißt vorzugsweise durch einen Kleber. Das Gehäuse umfasst zweckmäßigerweise zwei, vorzugsweise jedoch drei Gehäuseteile, die im Bereich ihrer jeweiligen radialen Teilungsebenen miteinander verbunden sind. Dabei besteht die Möglichkeit, die Gehäuseteile mechanisch miteinander zu verbinden, insbesondere durch eine Schnapp-, Rast- oder Schraubverbindung. Derartige Verbindungen sind lösbar, so dass auch die Gehäuseteile bei Bedarf auseinandergenommen werden können. Für den Fall, dass die Gehäuseteile dauerhaft miteinander verbunden bleiben sollen, das heißt, diese unlösbar sind, werden die Gehäuseteile vorzugsweise durch Schweißen oder Kleben miteinander verbunden.

### Kurze Beschreibung der Zeichnungen

Ein Ausführungsbeispiel des erfindungsgemäßen Filters wird nachstehend anhand der Zeichnung näher erläutert. In der Zeichnung zeigt:
- Figur 1: eine perspektivische Darstellung eines Luftfilters mit Verschlussdeckel,
- Figur 2: eine Ansicht auf die Längsseite des Luftfiltergehäuses,
- Figur 3: einen Längsschnitt durch den Luftfilter,
- Figur 4: eine vergrößerte Darstellung eines Abschnitts eines Sicherheitselementes,
- Figur 5: die Darstellung der Einzelheit V in Figur 3,
- Figur 6: die Darstellung des Luftfiltergehäuses gemäß Figur 2 mit einem außerhalb des Gehäuses befindlichen Filtereinsatz,
- Figur 7: eine perspektivische Darstellung des Luftfilters gemäß Figur 6.

### Ausführungsform(en) der Erfindung

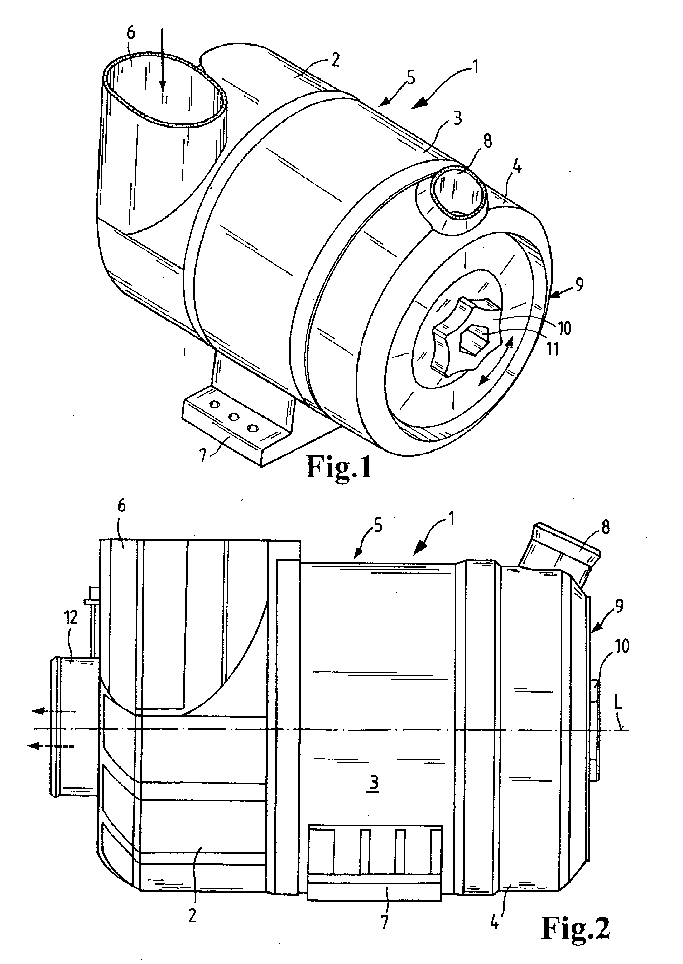

In Figur 1 ist ein Luftfilter 1 gezeigt, der ein aus drei Gehäuseteilen 2, 3, 4 bestehendes Gehäuse 5 aufweist. An dem Gehäuseteil 2 ist ein Lufteinlassstutzen 6 angeformt, durch den der zu reinigende Luftstrom in das Gehäuse 5 eintritt. Am mittleren Gehäuseteil 3 ist ein Flansch 7 vorgesehen, der zur Befestigung des Luftfilters 1 dient. Das Gehäuseteil 4 weist an seiner Mantelfläche einen Absaugstutzen 8 auf, durch den Staubpartikel abgesaugt werden können. Stirnseitig ist das Gehäuseteil 4 mittels eines Deckels 9 geschlossen, an dem ein Griffelement 10 vorgesehen ist. Das Griffelement 10 hat einen im Wesentlichen sternförmigen Außenumfang und ist in der Mitte mit einer Innensechskantöffnung 11 versehen, die zum Einsatz eines entsprechenden Werkzeugs dient. Das Griffelement 10 ist somit eine Anordnung, die zur Verbesserung einer Krafteinleitung zum Drehen des Deckels 9 mittels Handkraft oder einem Werkzeug dient.

Die Figur 2 zeigt den Luftfilter 1 in einer Ansicht auf dessen Längsseite, wobei mit L die Längsachse des Gehäuses 5 bezeichnet ist. Das Gehäuse 5 besteht aus den Gehäuseteilen 2, 3, 4 mit dem Lufteinlassstutzen 6, dem Flansch 7, dem Absaugstutzen 8 und dem Deckel 9 mit Griffelement 10. Außerdem ist aus dieser Darstellung ein Auslassstutzen 12 zu ersehen, der konzentrisch zur Längsachse L angeordnet ist.

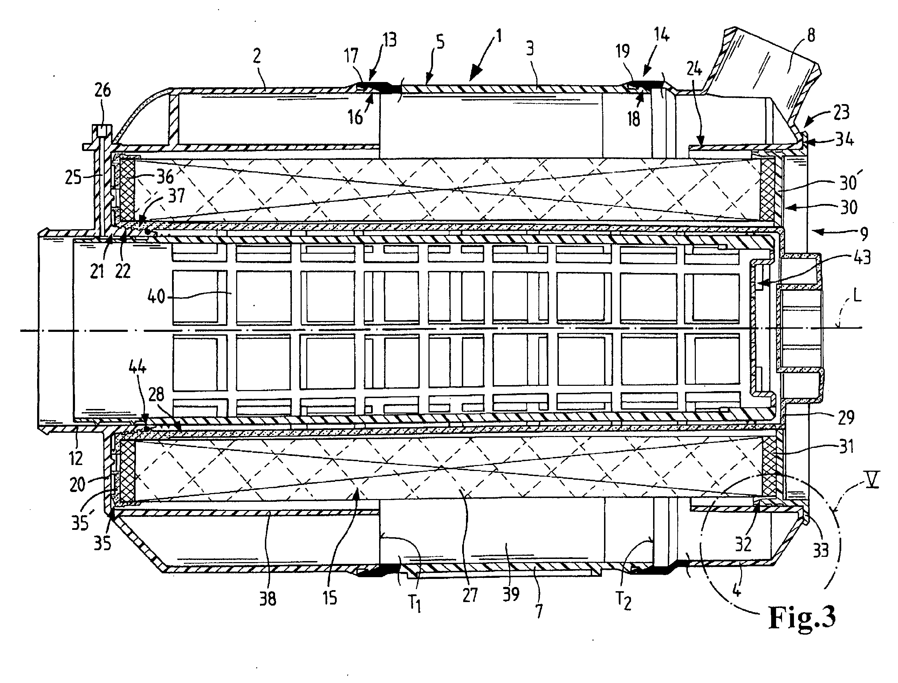

Figur 3 zeigt einen Längsschnitt durch den Luftfilter 1 mit dem aus den Gehäuseteilen 2, 3, 4 bestehenden Gehäuse 5. Die Gehäuseteile 2, 3, 4 weisen an den jeweils aneinanderliegenden Flächen radiale Teilungsebenen T₁ und T₂ auf. Benachbart zu diesen Teilungsebenen T₁, T₂ sind die Gehäuseteile 2, 3, 4 mit Rastvorrichtungen 13, 14 versehen, womit die Gehäuseteile 2, 3, 4 auf einfache Weise montierbar sind. Da die Rastvorrichtungen 13, 14 sich über den Umfang des Gehäuses 5 erstrecken und gegenseitig überlappende Abschnitte 16, 17 bzw. 18, 19 bilden, wird dadurch auch die Fluiddichtheit des Gehäuses 5 erreicht.

An dem Gehäuseteil 2 ist eine Stirnwand 20 ausgebildet, die sich radial bis zu dem Auslassstutzen 12 erstreckt, der auf der Innenseite der Stirnwand 20 einen in das Gehäuse 5 ragenden Abschnitt 21 umfasst, an dem ein Außengewinde 22 ausgebildet ist. Entlang der Stirnwand 20 erstreckt sich ein radialer Kanal 25 mit einer Anschlussöffnung 26 für den Anschluss einer hier nicht gezeigten Druckmessvorrichtung. Das Gehäuseteil 4 weist an seiner Stirnseite 23 eine Öffnung auf, die durch einen axialen Rohrabschnitt 24 gebildet wird, der sich von der Stirnseite 23 ausgehend koaxial zur Längsachse L in das Gehäuse 5 erstreckt.

In dem Gehäuse 5 befindet sich ein Filterelement 15, das im Wesentlichen aus einem auf einem Stützgitter 28 angeordneten Filtermedium 27 besteht. Das Stützgitter 28 besitzt an dem innerhalb des Rohrabschnitts 24 liegenden Ende eine geschlossene Stirnwand 29, die innerhalb einer Öffnung eines Ringelementes 30 liegt und diese vollständig ausfüllt. Das Ringelement 30 und die Stirnwand 29 bilden somit gemeinsam den Deckel 9, der in Fig. 1 gezeigt ist. Das Ringelement 30 bildet auch eine Endscheibe 30' des Filterelementes 15 und ist mit dem Filtermedium 27 durch eine Klebstoffschicht 31 fest verbunden und gegen diese sowie das Stützgitter 28 abgedichtet. Das Ringelement 30 besitzt auch einen axialen Abschnitt 32, der in dem Rohrabschnitt 24 gehalten ist und an seiner Außenseite mit einem umlaufenden Kragen 33 versehen ist, der an einer Fläche 34 der Stirnseite 23 des Gehäuses 5 anliegt.

An dem Ende des Filterelementes 15, das dem Deckel 9 abgewandt liegt, ist an dem Stützgitter 28 ein radialer Flansch 35 angeordnet, der als Endscheibe 35' dient, die mit dem Filtermedium 27 ebenfalls durch eine Klebstoffschicht 36 verbunden ist. Der dem Flansch 35 benachbarte Abschnitt des Stützgitters 28 ist mit einem Innengewinde 37 versehen, so dass das Stützgitter 28 zur Befestigung des Filterelementes 15 im Gehäuse 5 auf das Gewinde 22 schraubbar ist. In der gezeigten Endposition verschließt dabei der Deckel 9 die am anderen Ende des Gehäuses 5 befindliche Stirnseite 23. Die Fig. 3 zeigt auch, dass in dem Gehäuseteil 2 eine koaxiale zylindrische Wand 38 vorhanden ist, durch die der durch den Lufteinlassstutzen eintretende Luftstrom abgelenkt wird, damit das Filtermedium 27 gleichmäßig über die gesamte Länge eines das Filtermedium 27 umgebenden Ringraums 39 beaufschlagt wird. Innerhalb des Stützgitters 28 befindet sich ein Sicherheitselement 43 mit einem weiteren Stützgitter 40, das reibschlüssig in dem Auslassstutzen 12 gehalten ist.

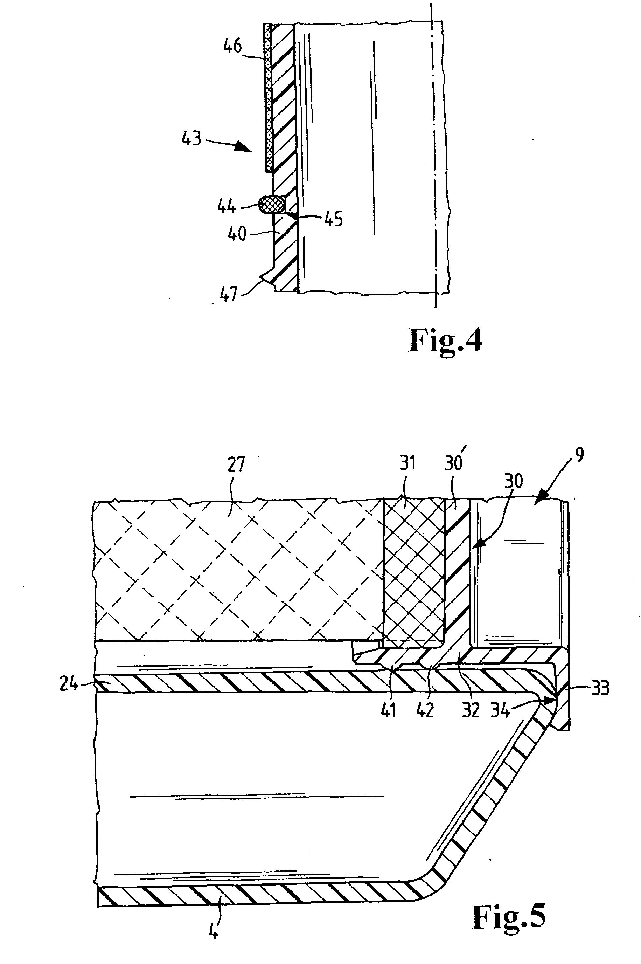

In der Figur 4 ist ein Abschnitt des Sicherheitselementes 43 vergrößert dargestellt. Das Stützgitter 40 ist auf einer äußeren Mantelfläche mit einem Filtermedium 46 versehen, das aus einem dünnen Material besteht. Dieses erstreckt sich nahezu über die gesamte Länge des Stützgitters 40, lediglich der Bereich zur Befestigung im Auslassstutzen 12 bleibt frei. Dort ist eine Ringnut 45 mit einem Dichtungsring 44 vorgesehen zur Abdichtung gegen den Auslassstutzen 12. Zur Befestigung dient ein Gewinde 47, von dem hier nur ein Gewindegang dargestellt ist. Das Filtermedium wird aufgeklebt oder aufgeschweißt, beispielsweise mittels Ultraschall.

Die Figur 5 zeigt die Einzelheit V aus Fig. 3 in vergrößertem Maßstab. Daraus ist ersichtlich, dass in dem Gehäuseteil 4 der Rohrabschnitt 24 ausgebildet ist, in dem sich der axiale Abschnitt 32 des Ringelementes 30 befindet, welches Bestandteil des Deckels 9 ist. Das Ringelement 30 bildet die Endscheibe 30' für das Filtermedium 27, welches mit der Endscheibe 30' durch eine Klebstoffschicht 31 verbunden ist. An der Mantelfläche des axialen Abschnitts 32 befinden sich zwei Ringwülste 41 und 42, die an der Innenwandung des Rohrabschnitts 24 anliegen und auf diese Weise zwei in axialem Abstand zueinander befindliche Dichtungen bilden. An dem Gehäuseteil 4 ist stirnseitig die Fläche 34 vorgesehen, an der der Kragen 33 des Ringelementes 30 anliegt.

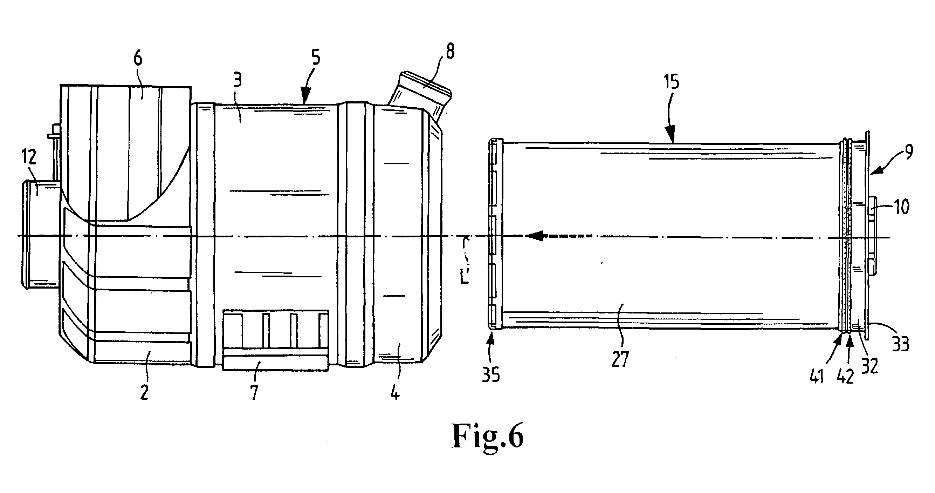

Die Figur 6 zeigt links das Gehäuse 5 gemäß der Darstellung in Fig. 2, wobei für gleiche Teile die Bezugszeichen mit denjenigen der zuvor beschriebenen Figuren übereinstimmen. Rechts in Figur 5 ist das Filterelement 15 gezeigt, wie es aus dem Gehäuse 5 entnommen ist bzw. vor dessen Einsatz in das Gehäuse 5. Das Filterelement 15 ist an einem Ende mit dem Deckel 9 versehen, an dem das Griffelement 10 angeordnet ist, und wobei an dem Deckel 9 ein axialer Abschnitt 32 angeformt ist, an dem sich die Ringwülste 41 und 42 befinden. Am anderen Ende des Filterelementes befindet sich der Flansch 35, der mit dem Filtermedium 27 verbunden ist. Das Filterelement 15 bildet somit gemeinsam mit dem Deckel 9 eine Baueinheit, so dass zur Entnahme aus dem Gehäuse 5 bzw. zum Einsatz in dieses Gehäuse lediglich ein einziges Bauteil zur handhaben ist.

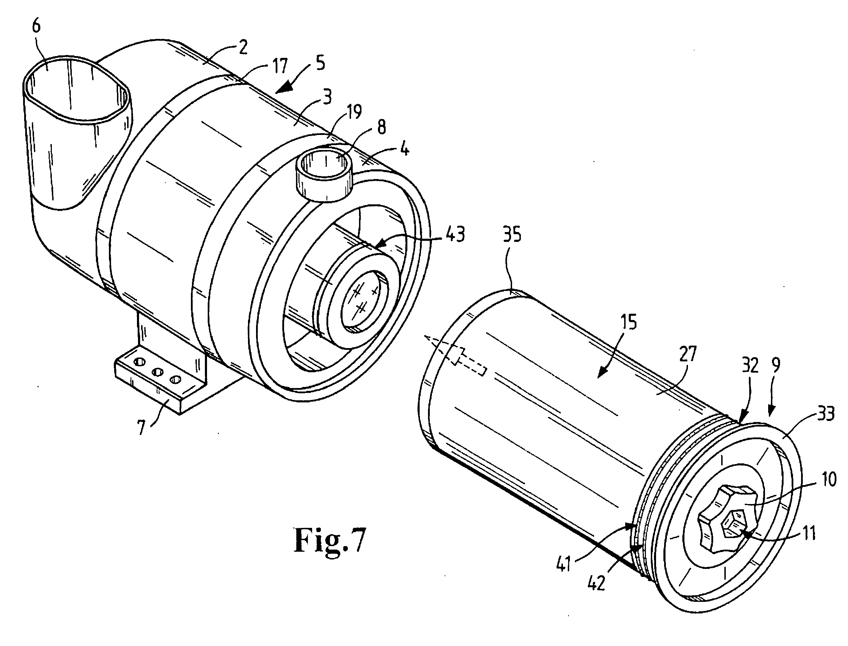

Die Figur 7 zeigt in perspektivischer Darstellung das Gehäuse 5 mit dem daraus entnommenen Filterelement 15. In der stirnseitigen Öffnung des Gehäuseteils 4 ist das vordere Ende des Sicherheitselementes 43 zu sehen. Beim Wechseln des Filterelementes 15 verbleibt das Sicherheitselement 43 in seiner eingebauten Position und deckt somit den Auslassstutzen am Gehäuseteil 2 ab, um das Eindringen von Schmutz in das angeschlossene System zu verhindern. Auch im Falle eines eingebauten, jedoch beschädigten Filterelementes 15 erfüllt das Sicherheitselement 43 eine solche Funktion.

## Patentansprüche

1. Filter (1), insbesondere Luftfilter mit einem Gehäuse (5) und einem darin angeordneten, ein Filtermedium (27) umfassenden Filterelement (15), wobei das Gehäuse (5) im Bereich eines stirnseitigen Endes mit einem lösbaren Deckel (9) versehen ist, durch den das Gehäuse (5) geöffnet oder geschlossen werden kann, wobei der lösbare Deckel (9) eine gemeinsame Baueinheit mit dem Filterelement (15) bildet und als Endscheibe (30') des Filterelementes (15) ausgestaltet ist, **dadurch gekennzeichnet, dass** das Filterelement (15) ein im Wesentlichen zylindrisches Stützgitter (28) aufweist, auf dem konzentrisch das Filtermedium (27) angeordnet ist, und wobei das Stützgitter (28) an seinem dem Deckel (9) benachbarten Ende geschlossen ist und einen Teil des Deckels (9) bildet.

2. Filter nach Anspruch 1, **dadurch gekenntzeichnet, dass** der die Endscheibe (30') des Filterelementes (15) bildende Deckel (9) mit dem stirnseitigen Ende des Filtermediums (27) verklebt ist.

3. Filter nach einem der Ansprüche 1 oder 2, **dadurch gekennzeichnet, dass** der Deckel (9) einen axialen Stutzen (32) umfasst, der in einem rohrförmigen Abschnitt (24) eines Gehäuseteils (4) aufgenommen und gegen diesen abgedichtet ist.

4. Filter nach Anspruch 3, **dadurch gekennzeichnet, dass** als Dichtung (2) an der Mantelfläche des Stutzens (32) angeformte Ringwülste (41, 42) vorgesehen sind.

5. Filter nach einem der Ansprüche 1 bis 4, **dadurch gekennzeichnet, dass** der Deckel (9) einen radial nach außen gerichteten umlaufenden Kragen (33) umfasst, der an einer stirnseitigen Fläche (34) des Gehäuses (5) liegt.

6. Filter nach einem der Ansprüche 1 bis 5, **dadurch gekennzeichnet, dass** der die Endscheibe (30') bildende Teil des Deckels (9) als Ringelement (30) mit einer zentrischen Öffnung gestaltet ist und das geschlossene Ende des Stützgitters (28) diese Öffnung ausfüllt.

7. Filter nach Anspruch 1 und 6, **dadurch gekennzeichnet, dass** innerhalb des Stützgitters (28) ein Sicherheitselement (43) angeordnet ist, das abgedichtet an einem Auslassstutzen (12) gehalten ist.

8. Filter nach Anspruch 7, **dadurch gekennzeichnet, dass** das Sicherheitselement (43) aus einem Stützgitter (40) und einem dieses überspannende Filtermedium (46) besteht.

9. Filter nach einem der Ansprüche 1 bis 8, **dadurch gekennzeichnet, dass** der Deckel (9) an seiner Außenseite mit einer Anordnung (10) zur verbesserten Krafteinleitung im Hinblick auf ein Lösen oder Befestigen der Baueinheit versehen ist.

10. Filter nach einem der Ansprüche 1 bis 9, **dadurch gekennzeichnet, dass** an der Stirnseite des dem Deckel (9) abgewandten Endes des Gehäuses (5) ein Auslassstutzen (12) konzentrisch zur Längsachse (L) des Gehäuses (5) angeordnet ist.

11. Filter nach Anspruch 10, **dadurch gekennzeichnet, dass** der Auslassstutzen (12) einen axial nach innen gerichteten Abschnitt (21) aufweist, der mit einem Außengewinde (22) versehen ist.

12. Filter nach Anspruch 1 und 11, **dadurch gekennzeichnet, dass** an dem Ende des Stützgitters (28) das dem Deckel (9) abgewandt liegt, ein Innengewinde (37) vorgesehen ist, auf das das Außengewinde (22) am Abschnitt (21) des Auslassstutzens (12) schraubbar ist.

13. Filter nach Anspruch 1, **dadurch gekennzeichnet, dass** das Stützgitter (28) an seinem dem Deckel (9) abgewandten Ende einen radialen Flansch (35) aufweist, der als diesem Ende des Filtermediums (27) zugeordnete Endscheibe (35') dient.

14. Filter nach einem der Ansprüche 1 bis 13, **dadurch gekennzeichnet, dass** das Gehäuse (5) mindestens zwei, vorzugsweise 3 Gehäuseteile (2, 3,4) umfasst, die im Bereich ihrer jeweiligen radialen Teilungsebenen (T₁, T₂) miteinander verbunden sind.

15. Filter nach Anspruch 14, **dadurch gekennzeichnet, dass** die Gehäuseteile (2, 3, 4) mechanisch miteinander verbunden sind, insbesondere durch eine Schnapp-, Rast- oder Schraubverbindung.

16. Filter nach Anspruch 14, **dadurch gekennzeichnet, dass** die Gehäuseteile (2, 3, 4) durch Schweißen oder Kleben verbunden sind.

## Claims

1. Filter (1), in particular air filter with a housing (5) and a filter element (15) comprising a filter medium (27) and disposed therein, the housing (5) being provided in the area of a front end with a detachable cover (9) by means of which the housing (5) can be opened or closed, the detachable cover (9) forming a common assembly with the filter element (15) and being designed as an end plate (30') of the filter element (15), **characterized in that** the filter element (15) features a basically cylindrical supporting grid (28) on top of which the filter medium (27) is disposed concentrically, and the supporting grid (28) being closed at its end adjacent to the cover (9) and forming one part of the cover (9).

2. Filter according to claim 1, **characterized in that** the cover (9) forming the end plate (30') of the filter element (15) is glued with the frontal end of the filter medium (27).

3. Filter according to one of the claims 1 or 2, **characterized in that** the cover (9) comprises an axial connecting piece (32) which is mounted in a tubular housing portion (24) of one housing component (4) and sealed against it.

4. Filter according to claim 3, **characterized in that** integrally molded annular beads (41, 42) are provided as gasket (2) at the outside surface of the connecting piece (32).

5. Filter according to one of the claims 1 to 4, **characterized in that** the cover (9) comprises a radially outwardly directed collar (33) which butts against a frontal plane (34) of the housing (5).

6. Filter according to one of the claims 1 to 5, **characterized in that** the part of the cover (9) forming the end plate (30') is designed as annular element (30) with a central opening and that the closed end of the supporting grid (28) completely fills this opening.

7. Filter according to claim 1 and 6, **characterized in that** inside the supporting grid (28) a safety element (43) is disposed which is held at an outlet fitting (12) in a sealed manner.

8. Filter according to claim 7, **characterized in that** the safety element (43) is made of a supporting grid (40) and a filter medium (46) covering this grid.

9. Filter according to one of the claims 1 to 8, **characterized in that** the cover (9) is provided at its exterior side with an arrangement (10) for an improved force application with regard to detaching or attaching the assembly.

10. Filter according to one of the claims 1 to 9, **characterized in that** an outlet fitting (12) is disposed concentrically to the longitudinal axis (L) of the housing (5) at the front side of the end of the housing (5) facing away from the cover (9).

11. Filter according to claim 10, **characterized in that** the outlet fitting (12) features a radially inwardly directed section (21) which is provided with an external thread (22).

12. Filter according to claim 1 and 11, **characterized in that** at the end of the supporting grid (28) which is facing away from the cover (9) a female thread (37) is provided onto which the external thread (22) can be screwed at the section (21) of the outlet fitting (12).

13. Filter according to claim 1, **characterized in that** the supporting grid (28) features at the end facing away from the cover (9) a radial flange (35) which serves as end plate (35') allocated to this end of the filter medium (27).

14. Filter according to one of the claims 1 to 13, **characterized in that** the housing (5) comprises at least two, preferably three housing components (2, 3, 4) which are connected with each other in the area of their respective radial partition planes (T1, T2).

15. Filter according to claim 14, **characterized in that** the housing components (2, 3, 4) are connected with each other mechanically, in particular by a snap-on connection, a locking connection or a screwed connection.

16. Filter according to claim 14, **characterized in that** the housing components (2, 3, 4) are connected either by welding or by gluing.

## Revendications

1. Filtre (1), en particulier filtre à air avec un boîtier (5) et un élément filtrant (15) placé à l'intérieur et comprenant un milieu filtrant (27), le boîtier (5) étant prévu dans la zone d'une extrémité frontale avec un couvercle amovible (9) par lequel le boîtier (5) peut être ouvert ou fermé, le couvercle amovible (9) formant une unité commune avec l'élément filtrant (15) et étant réalisé en tant que plaque d'extrémité (30') de l'élément filtrant (15), **caractérisé en ce que** l'élément filtrant (15) présente une grille d'appui (28) essentiellement cylindrique sur laquelle le milieu filtrant (27) est placé de manière concentrique, et que la grille d'appui (28) est fermée à son extrémité voisine du couvercle (9) et forme une partie du couvercle (9).

2. Filtre selon la revendication 1, **caractérisé en ce que** le couvercle (9) formant la plaque d'extrémité (30') de l'élément filtrant (15) est collé avec l'extrémité frontale du milieu filtrant (27).

3. Filtre selon l'une des revendications 1 ou 2, **caractérisé en ce que** le couvercle (9) comprend un raccord axial (32) qui est monté dans une section en forme de tube (24) d'un élément de boîtier (4) et est étanché par rapport à cette section.

4. Filtre selon la revendication 3, **caractérisé en ce que** des bourrelets circulaires moulés (41, 42) sont prévus en tant que joint (2) sur la surface latérale du raccord (32).

5. Filtre selon l'une des revendications 1 à 4, **caractérisé en ce que** le couvercle (9) comprend un col circulaire (33) orienté en sens radial vers l'extérieur qui est appliqué contre une surface frontale (34) du boîtier (5).

6. Filtre selon l'une des revendications 1 à 5, **caractérisé en ce que** la partie du couvercle (9) formant la plaque d'extrémité (30') est conçue comme élément annulaire (30) avec une ouverture centrale et que l'extrémité fermée de la grille d'appui (28) comble cette ouverture.

7. Filtre selon les revendications 1 et 6, **caractérisé en ce qu'**un élément de sécurité (43) qui est maintenu de façon étanche sur une tubulure de sortie (12) est placé à l'intérieur de la grille d'appui (28).

8. Filtre selon la revendication 7, **caractérisé en ce que** l'élément de sécurité (43) est composé d'une grille d'appui (40) et d'un milieu filtrant (46) recouvrant cette grille.

9. Filtre selon l'une des revendications 1 à 8, **caractérisé en ce que** le couvercle (9) est pourvu sur sa face extérieure d'un ensemble (10) destiné à une meilleure introduction de la force en vue du desserrage ou de la fixation de l'unité.

10. Filtre selon l'une des revendications 1 à 9, **caractérisé en ce que**, sur la face frontale de l'extrémité du boîtier (5) orientée vers le côté opposé au couvercle (9), une tubulure de sortie (12) est disposée de manière concentrique par rapport à l'axe longitudinal (L) du boîtier (5).

11. Filtre selon la revendication 10, **caractérisé en ce que** la tubulure de sortie (12) présente une section (21) orientée en sens axial vers l'intérieur qui est pourvue d'un filet extérieur (22).

12. Filtre selon les revendications 1 et 11, **caractérisé en ce qu'**un filet intérieur (37) est prévu à l'extrémité de la grille d'appui (28) orientée vers le côté opposé au couvercle (9), sur lequel le filet extérieur (22) peut être vissé à la section (21) de la tubulure de sortie (12).

13. Filtre selon la revendication 1, **caractérisé en ce que** la grille d'appui (28) présente à son extrémité orientée vers le côté opposé au couvercle (9) une bride radiale (35) qui sert de plaque d'extrémité (35') afférente à cette extrémité du milieu filtrant (27).

14. Filtre selon l'une des revendications 1 à 13, **caractérisé en ce que** le boîtier (5) comprend au moins deux, de préférence trois pièces de boîtier (2, 3, 4) qui sont reliées les unes aux autres dans la zone de leurs plans de joint radiaux respectifs (T1, T2).

15. Filtre selon la revendication 14, **caractérisé en ce que** les parties de boîtier (2, 3, 4) sont reliées les unes aux autres par voie mécanique, notamment par un assemblage à enclenchement, à crans ou à vis.

16. Filtre selon la revendication 14, **caractérisé en ce que** les pièces de boîtier (2, 3, 4) sont reliées les unes aux autres par soudage ou collage.
